# EUROPÄISCHE PATENTSCHRIFT

(11) **EP 0 738 209 B1**
(45) Veröffentlichungstag und Bekanntmachung des Hinweises auf die Patenterteilung: **06.05.1998**
(21) Anmeldenummer: 95903315.0
(22) Anmeldetag: 02.12.1994
(51) Int. Cl.: B29C 47/16

(54) **EINSTELLBARE DROSSEL MIT FLACHEM KANALQUERSCHNITT**
ADJUSTABLE THROTTLE WITH FLAT CHANNEL CROSS-SECTION
SOUPAPE D'ETRANGLEMENT REGLABLE A SECTION TRANSVERSALE PLATE D'ECOULEMENT

(30) Priorität: 04.01.1994 DE 4400069
(43) Veröffentlichungstag der Anmeldung: 23.10.1996
(73) Patentinhaber: GROSS, Heinz, Dr.-Ing., D-64380 Rossdorf (DE)
(72) Erfinder: GROSS, Heinz, Dr.-Ing., D-64380 Rossdorf (DE)
(74) Vertreter: Rau, Manfred, Dr. Dipl.-Ing.
(86) Internationale Anmeldenummer: EP9404015
(87) Internationale Veröffentlichungsnummer: WO9518711

(56) Entgegenhaltungen:
- DE-C- 3 631 503
- LU-A- 31 072
- US-A- 3 122 789
- US-A- 3 884 611
- MODERN PLASTICS INTERNATIONAL., Nr.10, Oktober 1994, LAUSANNE CH Seiten 20 - 21, XP000445061 ERIC CULP 'Feedblock system to reduce gage variation in film, sheet'
- PATENT ABSTRACTS OF JAPAN vol. 8, no. 73 (M-287) (1510) 5. April 1984 & JP,A,58 220 707 (MITSUBISHI JUKOGYO K.K.) 22. Dezember 1983

## Beschreibung

Die Erfindung betrifft eine einstellbare Drossel mit einem flachen Fließkanal mit einem Breiten- zu Höhenverhältnis bzw. einem Umfangs- zu Höhenverhältnis von mindestens 10 zur Führung eines Massestromes eines fließfähigen Materials enthaltend einen Einströmbereich und einen Ausströmbereich und einen diese beiden Kanalbereiche verbindenden mittleren Fließkanalbereich, wobei der Fließkanal im gesamten Fließkanalbereich zwischen dem Fließkanaleintritt und dem Fließkanalaustritt senkrecht zur Strömungsrichtung trennebenenfrei und totstellenfrei ist, und wobei dessen Kanalhöhe im mittleren Fließkanalbereich von außen über Stellmittel durch elastische Verformung der Wandung wenigstens eines Wandbereiches um mehr als 0,1 mm veränderbar ist.

### Stand der Technik

Eine einstellbare Drossel der vorstehend genannten gattungsgemäßen Art ist aus der US-A-3 884 611 bekannt. Bei dieser Drossel ist der Fließkanal eben ausgebildet. In einer dickwandig ausgebildeten Begrenzungswand des Fließkanals ist eine Ausnehmung derart ausgebildet, daß ein dünner Wandbereich gebildet wird. Dieser in seiner Ruhestellung ebenfalls ebene, also planflächige Wandbereich kann durch Schrauben als Stellmittel in Richtung in den Fließkanal hinein verformt, also geringfügig gekrümmt werden, wodurch eine Einstellung der Kanalhöhe möglich wird. Zum einen sind die Möglichkeiten, die Kanalhöhe zu beeinflussen, begrenzt, da der dünne Wandbereich gelängt wird, was ohnehin nur sehr begrenzt möglich ist. Darüber hinaus ist nicht auszuschließen, daß nach zahlreichen Stellvorgängen das Material dieses dünnen Wandbereichs sich plastisch verformt und damit nicht mehr elastisch in seine Ausgangslage zurückgeht.

Aus der US-A-3 122 789 ist eine Extrusionsdüse bekannt, die einen geradlinig verlaufenden Fließkanal aufweist. Eine Wandung dieses Fließkanals kann durch hydraulischen Druck verformt werden, um die Öffnungsweite der Schlitzdüse an ihrem Ausströmbereich zu verändern. Abgesehen davon, daß hier nicht die Drosselung in einem zwischen einem Einströmbereich und einem Ausströmbereich liegenden mittleren Fließkanalbereich erfolgt, sind die Einstellprobleme die gleichen wie sie vorstehend bereits geschildert wurden.

### Aufgabe und Lösung

Aufgabe der Erfindung ist es, eine sehr fein einstellbare metallische Drossel zu entwickeln, mit der ein durchtretender Massestrom über der Breite des Strömungskanals verändert werden kann. Weiterhin ist es Aufgabe der Erfindung, unter Verwendung der erfindungsgemäßen Vorrichtung coextrudierte Bahnen mit einer bisher nicht erreichbaren Schichtdickenkonstanz herzustellen.

Diese Aufgabe wird erfindungsgemäß dadurch gelöst, daß der Fließkanal eine Krümmung aufweist, und daß die elastisch verformbare Wandung den Fließkanal im Bereich seiner Krümmung begrenzt.

Weiterhin ist es vorteilhaft, wenn sich vor und nach dem Fließkanalbereich Fließkanalbereiche befinden, deren Geometrie nicht veränderbar ist.

Gemäß einer weiteren vorteilhaften Ausgestaltung beträgt der Stellweg der Stellelemente mindestens 0,1 mm.

Nach einer weiteren vorteilhaften Ausgestaltung weist der Fließkanal im Bereich der Stellelemente wenigstens bereichsweise eine Kanalhöhe H auf, für die gilt: H < 5 mm.

Besonders vorteilhaft ist es, wenn die Wandung im Bereich ihrer elastischen Verformbarkeit eine Wanddicke A aufweist, für die gilt: A < 6 mm und vorzugsweise 0,5 mm ≤ A ≤ 4 mm.

Gemäß einer weiteren vorteilhaften Weiterbildung ist der Abstand der Stellelemente untereinander kleiner 15 mm.

Es ist weiterhin von Vorteil, wenn der Fließkanal beheizbar ist und sich in einer Extrusionsdüse befindet.

Gemäß einer weiteren vorteilhaften Ausgestaltung befindet sich der Fließkanal in einem Coextrusionsadapter.

Schließlich ist es von Vorteil, wenn die elastisch verformbare Wandung den Fließkanal im Bereich seiner Krümmung auf seiner Außenseite begrenzt.

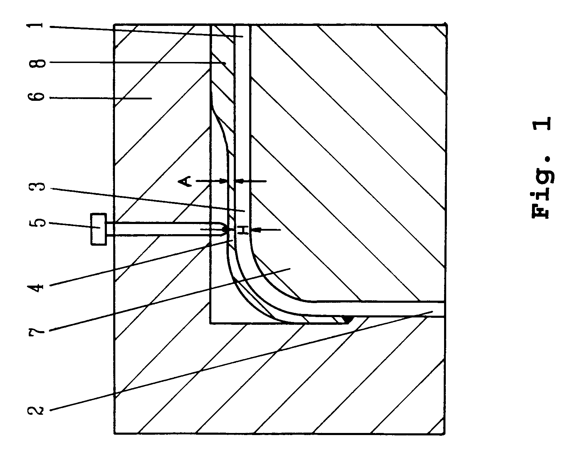

Die gestellte Aufgabe wird durch eine Konstruktion, wie sie in Fig. 1 schematisch im Schnittbild dargestellt ist, gelöst. Das Breiten- zu Höhenverhältnis des Fließkanals sollte größer 10 sein, vorzugsweise jedoch 20 bis 5000 betragen. Der Stellweg der Stellelemente 5 sollte dabei mindestens 0,1 mm vorzugsweise jedoch 1-1,5 mm sein, um lokal eine ausreichende Veränderung des Fließkanalwiderstandes über der Breite des Kanals zu erreichen. Um diesen Verstellweg zu gewährleisten , sollte die Wand 4 wenigstens eine leichte Krümmung aufweisen und eine Wandstärke A von < 6 mm vorzugsweise jedoch eine von 0,5 bis 4 mm besitzen. Eine in engem Abstand über der Fließkanalbreite wirkende Verstellung wird durch die so erzeugte Flexibilität der Wandung und durch einen möglichst kleinen Stellschraubenabstand von < 40 mm vorzugsweise von < 15 mm erreicht.

### Vorteil der Erfindung

Bedingt durch die in Fig. 1 dargestellte geringe Dicke A der Wandung 4 des Fließkanalbereiches 3 besitzt die Wandung eine große Flexibilität, so daß sie wegen der geringen benötigten Deformationskräfte mit klein dimensionierten Stellschrauben 5 lokal eng begrenzt in Richtung des Fließkanals 3 ausgelenkt werden kann. Damit läßt sich die durchströmbare Höhe H des Fließkanals 3 sehr feinfühlig verändern, was zu einer effektiven Beeinflussung des Massestromes führt.

Die Drossel besteht lediglich aus 3 Teilen, der Oberhälfte 6, der Unterhälfte 7 und dem Mittelteil 8. Sie besitzt damit im Bereich des Fließkanals keine Trennebene senkrecht zur Fließrichtung. Es existieren lediglich die zwei Trennebenen zwischen den drei Teilen 6, 7 und 8. Diese verlaufen in Fließkanalrichtung in den beiden Randbereichen des Fließkanals, so daß die Gefahr der Materialstagnation sehr gering ist. Zusätzlich ist die Gefahr von Undichtigkeiten ebenfalls gering. Durch die spezielle Konstruktion ist sichergestellt, daß sich in Strömungsrichtung die Geometrie des Fließkanals nur stetig ändern kann. Es können folglich keine Totstellen durch sprungartige Veränderungen der Fließkanalhöhe entstehen, wie dies bei in den Fließkanal hineinragenden Staubalken unvermeidbar der Fall ist.

Mit der beschriebenen einstellbaren Drossel kann man bei konstant treibenden Druckgefälle den Gesamtmassestrom verändern. Dies geschieht durch Verstellen aller Stellelemente um den gleichen Betrag. Man kann aber auch die Massestromverteilung über der Breite des Fließkanals verändern. Dies geschieht durch Verstellen einzelner Stellelemente. Die spezielle Drosselkonstruktion ist besonders geeignet, um thermoplastisch verarbeitbare Massen zu beeinflussen, vorzugsweise Kunststoffe aller Art wie PE; PP; PS; PVC; PMMA; PC; PA; PSU; PES; und PEEK. Es können aber auch nicht polymere Massen beeinflußt werden, solange sie eine ausreichende Fließfähigkeit besitzen.

### Ausführungsbeispiele der Erfindung

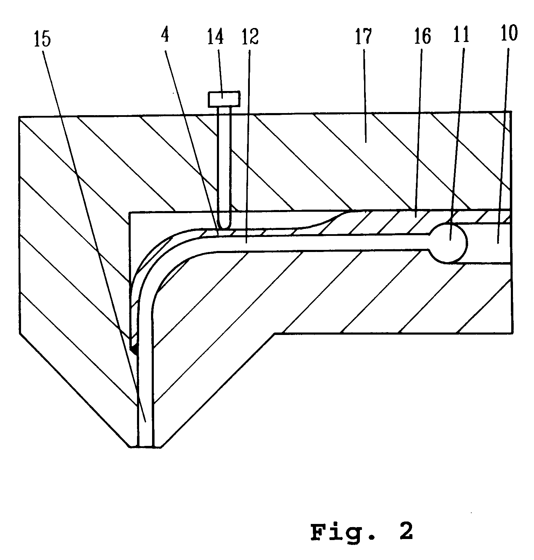

Eine derart gestaltete Drossel kann man nun in alle Bauteile integrieren, in denen ein Fluid in einem flachen Fließkanal strömt. Besonders interessant ist die Integration in Werkzeuge, wie sie in der Kunststoffverarbeitung üblich sind. Fig. 2 zeigt die Verwendung in einer Extrusionsdüse zur Herstellung von flachen Kunststoffbahnen. Die Schmelze strömt dabei durch einen schmalen Schmelzekanal 10 in die Düse ein und wird im Verteilerkanal 11 auf die Austrittsbreite der Düse verteilt. Über die gesamte Breite des sich anschließenden Fließkanalbereiches 12 erstreckt sich nun die flexible Wandung 4, die über Stellmittel 14 lokal in ihrer räumlichen Lage verändert werden kann.

An diesen Drosselbereich schließt sich wieder ein Kanalbereich 15 mit nicht veränderbarer Fließkanalgeometrie an. Die Wandung 4 besitzt eine 90° Biegung, was in zweifacher Hinsicht von Vorteil ist. Zum ersten erhöht sich die Flexibilität der Wandung, und zum zweiten wird dadurch die aus dem in aller Regel horizontal stehenden Extruder in die Düse einströmende Schmelze innerhalb der Düse in die Vertikale umgelenkt. Es hat sich nämlich in der Vergangenheit gezeigt, daß das vertikale Einspeisen einer Schmelze in ein horizontal angeordnetes Glättwerk vorteilhafter ist, als das horizontale Einspeisen in ein vertikal angeordnetes Glättwerk. In diesem Fall ist die flexible Wand Bestandteil eines separaten Düsenmittelteiles 16, das im Bereich des Einströmkanals 10 mit der Düsenhälfte 17 verschraubt ist und im Bereich des Kanals 14 an die Düsenhälfte 17 angelötet oder angeschweißt ist.

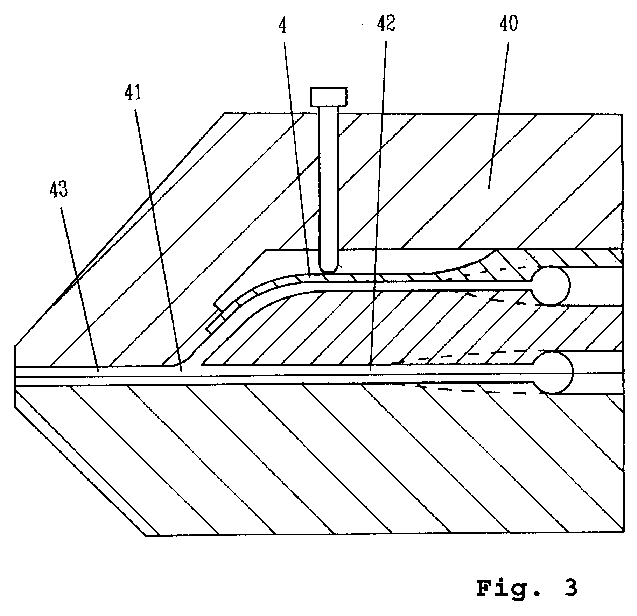

In ähnlicher Weise läßt sich die Drossel auch in eine Mehrkanaldüse integrieren. Eine derartige Lösung zeigt Fig. 3. Speziell im Bereich der Mehrkanaldüsen klafft heute noch eine große Kluft zwischen den Anforderungen der Verarbeiter und den technischen Möglichkeiten, die zur Zeit verfügbar bzw. bekannt sind. Durch Integration der erfindungsgemäßen Drossel in den Nebenkanal 40 gelingt es, den Schmelzestrom der Nebenschicht vor dem Kanalbereich 43 so über der Breite zu beeinflussen, daß im Kanalbereich 41 ein über der gesamten Kanalbreite nahezu konstanter Schmelzestrom auf die durch den Fließkanal 42 strömende Hauptschichtschmelze aufgelegt werden kann.

Durch die auf diese Weise in den Nebenkanal einer Mehrkanaldüse integrierte Drossel besitzt man erstmals die konstruktiven Voraussetzungen für eine Dickenregelung einzelner Schichten über der Breite der Bahn. Die bisher bekannten Konstruktionen mit einer Staubalkenverstellung waren für eine Schichtdickenregelung wegen der benötigten hohen Verstellkräfte ungeeignet. Erst die flexible Lippe, die nur geringe Verstellkräfte erfordert und bei der die elastischen Kräfte des Stahls und der Innendruck durch das Fluid dafür sorgen, daß eine Rückstellkraft vorhanden ist, machen eine Massestromregelung einzelner Schichten über der Breite des Fließkanals in Abhängigkeit der am Produkt gemessenen Schichtdicke möglich.

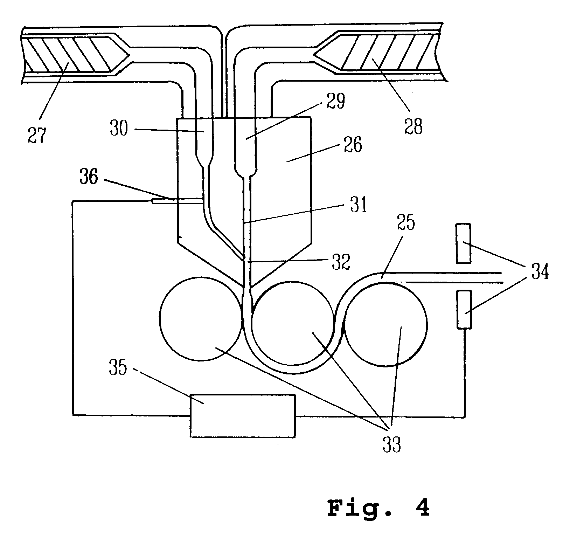

Durch die erfindungsgemäße Drossel ist man damit erstmals in der Lage, mit einer Mehrkanaldüse die Dicke einer Nebenschicht mittels eines Reglers zu regeln. Das Verfahren ist in Fig. 4 beispielhaft dargestellt. Dabei weden zwei Schmelzeströme mittels der Extruder 27 und 28 erzeugt und in die Mehrkanaldüse 30 eingespeist. Durch Messung der Schichtdicke der Nebenschicht nach Verlassen des Werkzeuges 26 mittels einer selektiven Schichtdickenmeßvorrichtung 34 und Vergleich der Soll- und Istwerte in einem Regler 35 lassen sich die Stellmittel 36 gezielt ansteuern und damit Schichtdickenunterschiede über der Breite der Bahn ausregeln. Selektive in der Linie messende Schichtdickenmeßverfahren sind verfügbar und Regelalgorithmen für diese Aufgabenstellung gehören heute im Bereich der Folienherstellung zum Stand der Technik. Die Bahn kann dabei mittels Glättwalzen 33 geglättet und gekühlt werden. Im Fall eines Profils kann die Kühlung auch über eine feststehende Kalibrierung erfolgen, durch die das Profil hindurchgezogen wird.

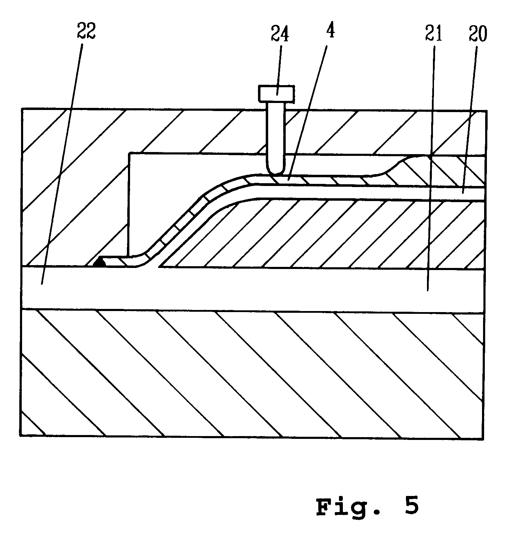

Die Verwendung der Drossel in einem Coextrusionsadapter zeigt Fig. 5. Auch in diesem Fall befindet sich im Strömungskanal für die Coextrusionsschmelze vor der eigentlichen Drossel ein Fließkanalbereich 20 mit nicht veränderbarer Geometrie und am Ende, nachdem der Coextrusionskanal in den Fließkanal 21 für die Hauptschmelze eingemündet ist, erneut ein Fließkanalbereich 22 mit nicht veränderbarer Geometrie. Die Drossel wird wiederum gebildet durch die dünne Wand 4, die über Stellmittel 24 in ihrer Lage veränderbar ist.

In allen beschriebenen Anwendungen kann demnach durch Betätigung der Stellelemente der Fließkanalwiderstand über der Breite feinfühlig verändert werden. Damit können unerwünschte Schmelzestromunterschiede über der Breite des Fließkanals ausgeglichen werden. Man kann aber auch ein gewünschtes Schmelzestromprofil über der Breite des Fließkanals, wie dies häufig bei Coextrusionsadptern erforderlich ist, gezielt erzeugen.

Totstellenfreie, einstellbare Drosseln kann man aber auch sehr vorteilhaft zur Steuerung des Massestromverhältnisses bei geteilten Fließkanälen, die von z. B. einem einzigen Extruder gespeist werden, einsetzen. Dies ist häufig bei Profildüsen der Fall, wo man oft ein exaktes Wanddickenverhältnis zwischen unterschiedlichen Wandungen, die aus einem einzigen Hauptkanal gespeist werden, erreichen möchte. So kann es zum Beispiel bei Stegdoppelplattendüsen sehr interessant sein, trotz fest vorgegebener Fließkanalgeometrien in der Düse das Verhältnis der Stegdicken zu den Gurtdicken in bestimmten Bereichen verändern zu können. Werden, wie im Falle von Stegdoppelplatten aus PC, die Gurte auch noch mit einer Witterungsschutzschicht coextrudiert, so ist es eminent wichtig, ein exaktes Druckverhältnis in den Steg- und Gurtfließkanälen einzuhalten, um störende Verdickungen oder Verjüngungen der Coextrusionsschicht im Einmündungsbereich der Stege zu vermeiden. Durch die Integration einer erfindungsgemäßen einstellbaren Drossel in einen der beiden Fließkanäle läßt sich der Fließkanalwiderstand relativ zum anderen Strömungskanal verändern. Die Folgen sind veränderte Massestromverhältnisse und veränderte Druckverläufe in den Fließkanälen.

## Patentansprüche

1. Einstellbare Drossel mit einem flachen Fließkanal mit einem Breiten- zu Höhenverhältnis bzw. einem Umfangs- zu Höhenverhältnis von mindestens 10 zur Führung eines Massestromes eines fließfähigen Materials enthaltend einen Einströmbereich (1) und einen Ausströmbereich (2) und einen diese beiden Kanalbereiche verbindenden mittleren Fließkanalbereich (3), wobei der Fließkanal im gesamten Fließkanalbereich (3) zwischen dem Fließkanaleintritt und dem Fließkanalaustritt senkrecht zur Strömungsrichtung trennebenenfrei und totstellenfrei ist, und wobei dessen Kanalhöhe im mittleren Fließkanalbereich (3) von außen über Stellmittel durch elastische Verformung der Wandung (4) wenigstens eines Wandbereiches um mehr als 0,1 mm veränderbar ist, dadurch gekennzeichnet, daß der Fließkanal eine Krümmung aufweist, und daß die elastisch verformbare Wandung (4) den Fließkanal im Bereich seiner Krümmung begrenzt.

2. Drossel nach Anspruch 1, dadurch gekennzeichnet, daß sich vor und nach dem Fließkanalbereich (3) Fließkanalbereiche befinden, deren Geometrie nicht veränderbar ist.

3. Drossel nach Anspruch 1 oder 2, dadurch gekennzeichnet, daß der Stellweg der Stellelemente mindestens 0,1 mm beträgt.

4. Drossel nach einem der Ansprüche 1 bis 3, dadurch gekennzeichnet, daß der Fließkanal im Bereich der Stellelemente wenigstens bereichsweise eine Kanalhöhe H aufweist, für die gilt: H < 5 mm.

5. Drossel nach einem der Ansprüche 1 bis 4, dadurch gekennzeichnet, daß die Wandung (4) im Bereich ihrer elastischen Verformbarkeit eine Wanddicke A aufweist, für die gilt: A < 6 mm und vorzugsweise 0,5 mm ≤ A ≤ 4 mm.

6. Drossel nach einem der Ansprüche 1 bis 5, dadurch gekennzeichnet, daß der Abstand der Stellelemente untereinander kleiner 15 mm ist.

7. Drossel nach einem der Ansprüche 1 bis 6, dadurch gekennzeichnet, daß der Fließkanal beheizbar ist und sich in einer Extrusionsdüse befindet.

8. Drossel nach einem der Ansprüche 1 bis 6, dadurch gekennzeichnet, daß sich der Fließkanal in einem Coextrusionsadapter befindet.

9. Drossel nach einem der Ansprüche 1 bis 8, dadurch gekennzeichnet, daß die elastisch verformbare Wandung (4) den Fließkanal im Bereich seiner Krümmung auf seiner Außenseite begrenzt.

## Claims

1. An adjustable throttle having a flat flow channel with a width to height ratio or a circumference to height ratio, respectively, of at least 10 for the guidance of a mass flow of free flowing material, comprising an inlet portion (1) and an outlet portion (2) and a central flow channel portion (3) interconnecting these two channel portions, the flow channel being free from parting planes and free from dead spots perpendicular to the flow direction throughout the flow channel portion (3) between the flow channel inlet and the flow channel outlet, and its channel height being modifiable, in the central flow channel portion (3), from the outside by way of adjusting means by elastic deformation of the wall (4) of at least one wall portion by more than 0.1 mm, characterized in that the flow channel has a curvature and in that the elastically deformable wall (4) defines the flow channel in the vicinity of the latter's curvature.

2. A throttle according to claim 1, characterized in that flow channel portions of non modifiable geometry are located before and behind the flow channel portion (3).

3. A throttle according to claim 1 or 2, characterized in that the adjusting range of the adjusting members is at least 0.1 mm.

4. A throttle according to one of claims 1 to 3, characterized in that in the vicinity of the adjusting members, the flow channel has portions of a channel height H, to which applies: H < 5 mm.

5. A throttle according to one of claims 1 to 4, characterized in that the wall (4), where elastically deformable, has a wall thickness A, to which applies: A < 6 mm and preferably 0.5 mm ≤ A ≤ 4 mm.

6. A throttle according to one of claims 1 to 5, characterized in that the distance of the adjusting members from each other is less than 15 mm.

7. A throttle according to one of claims 1 to 6, characterized in that the flow channel is heatable and located in an extrusion die.

8. A throttle according to one of claims 1 to 6, characterized in that the flow channel is located in a coextrusion adapter.

9. A throttle according to one of claims 1 to 8, characterized in that the elastically deformable wall (4) defines the flow channel on the latter's outside in the vicinity of the latter's curvature.

## Revendications

1. Etranglement réglable muni d'un canal aplati d'écoulement présentant un rapport d'au moins dix entre la largeur et la hauteur ou, respectivement, entre le périmètre et la hauteur, en vue du guidage du débit massique d'un matériau coulant, et comprenant une zone d'afflux (1) et une zone de sortie (2), ainsi qu'une zone centrale (3) qui relie ces deux zones du canal, le canal d'écoulement étant exempt de plans de séparation et exempt de régions inopérantes dans toute la zone (3) entre l'entrée et la sortie dudit canal d'écoulement, perpendiculairement à la direction de l'écoulement, et sa hauteur pouvant être modifiée de l'extérieur dans la zone centrale (3) dudit canal, de plus de 0,1 mm, par l'intermédiaire de moyens de réglage et par déformation élastique de la paroi (4) d'au moins une région de cloisonnement, caractérisé par le fait que le canal d'écoulement possède une courbure ; et par le fait que la paroi (4) élastiquement déformable délimite ledit canal d'écoulement dans la région de sa courbure.

2. Etranglement selon la revendication 1, caractérisé par le fait que des zones du canal d'écoulement, dont la géométrie n'est pas modifiable, se trouvent avant et après la zone (3) dudit canal d'écoulement.

3. Etranglement selon la revendication 1 ou 2, caractérisé par le fait que la course de réglage des éléments de réglage mesure au moins 0,1 mm.

4. Etranglement selon l'une des revendications 1 à 3, caractérisé par le fait que le canal d'écoulement présente au moins par zones, dans la région des éléments de réglage, une hauteur H obéissant à la relation H < 5 mm.

5. Etranglement selon l'une des revendications 1 à 4, caractérisé par le fait que la paroi (4) présente, dans la plage de sa déformabilité élastique, une épaisseur A obéissant à la relation A < 6 mm et, de préférence, 0,5 mm ≤ A ≤ 4 mm.

6. Etranglement selon l'une des revendications 1 à 5, caractérisé par le fait que la distance mutuelle des éléments de réglage est inférieure à 15 mm.

7. Etranglement selon l'une des revendications 1 à 6, caractérisé par le fait que le canal d'écoulement peut être chauffé et se trouve dans une buse d'extrusion.

8. Etranglement selon l'une des revendications 1 à 6, caractérisé par le fait que le canal d'écoulement se trouve dans un adaptateur de coextrusion.

9. Etranglement selon l'une des revendications 1 à 8, caractérisé par le fait que la paroi (4) élastiquement déformable délimite le canal d'écoulement sur sa face externe, dans la région de sa courbure.
